# EUROPEAN PATENT APPLICATION

(11) **EP 1 010 932 A2**
(43) Date of publication of application: **21.06.2000**
(21) Application number: 99309501.7
(22) Date of filing: 29.11.1999
(51) Int. Cl.: F16L 39/00

(54) **Quick-coupling with built in check valves**

(30) Priority: 14.12.1998 US 211067
(71) Applicant: Scitex Digital Printing, Inc., Dayton, Ohio 45420-4099 (US)
(72) Inventor: Bowling, Bruce A., Beavercreek, Ohio 45432 (US); Katerberg, James A., Kettering, Ohio 45429 (US)
(74) Representative: Freed, Arthur Woolf

(57) **Abstract**

A fluid coupling (10,12) is provided having improved mounting or locating capabilities, for in a mounting aperture. A substantially cylindrically symmetric exterior (14) is capable of being inserted into the mounting aperture (23). Retaining capability is provided to engage symmetric retaining features and features of the mount, to prevent unwanted removal of the fitting from the mounting aperture.

## Description

### Technical Field

The present invention relates to connectors and, more particularly, to an improved coupling device that facilitates an axial or radial o-ring seal, with a built-in check valve, capable of floating to allow multiple and simultaneous connection.

### Background Art

In a variety of products a need exists for making multiple fluid connections to a component or subsystem. Frequently, it is desirable for these connections to have quick connect and disconnect capability that can be readily made or separated without tools. Furthermore, it is often desirable for the connections to incorporate check valves to prevent leakage or syphoning from an open fitting.

For low volume products, such connections are typically made through commercially purchased, snap locking, fittings that a customer must push or push and twist together. Precision tolerances are required to align the fittings to prevent leaks in systems where multiple connections must be made at one time.

Due to the difficulty associated with aligning such fittings, such fittings must typically be made one at a time. Besides requiring more effort from the customer these one-at-a-time connections can result in a number of user related problems. Such problems include, but are not limited to the user sometimes forgetting to connect a line which might produce a leak or an over pressure situation; improper seating or locking in a connection, which can cause the junction to separate and leak; fluid leaks onto the user as the connection is made or attempted; and an occasional inability to make or release a connection due to the way the connector rotated when the system was assembled.

The commercially available quick connecting fittings are also not ideal from a manufacturing standpoint. One such manufacturing shortcoming is that many quick connect fittings have a locking or release mechanism which must be properly oriented to allow customer access. As a result, such fittings can be detrimental to design size (requiring a larger package), ease of assembly (in that there may exist a need for bi-directional insertion or the use of special tools), and/or diminished feature use (in that the surrounding geometry can be compromised).

Furthermore, when such quick connection fittings attach to manifolds or housings, they almost always are attached by means of pipe thread. Teflon tape or some other sealant must then be used to prevent leakage at the threads. Also, when these quick connect fittings attach directly to the fluid tubing by means of barb fittings, space must be provided to allow during assembly the insertion of the tubing over the barb.

Other applications for quick connect fittings involving barbed connections might require a mix of barb options. These include straight barbs, barbed connections which are orientated at 90° relative to the quick connect orientation or even barbed connections to two tubes (a "T" connection). Maintaining the large variety of fitting types or adapters needed for these applications is undesirable from an inventory control standpoint.

Finally, with many fittings, of both the manifold and barb variety, there is also the need to provide space for a wrench to secure the fitting into place in the manifold or in some housing.

A need exists, therefore, for a novel quick connect fitting device that can overcome the problems associated with prior art devices.

### Summary of the Invention

This need is met by the small boundary radial or axial floating fluid coupling, which has a built-in valve capability. The device of the present invention can function as a common barb and manifold ("bulkhead") connector, capable of reducing part count, reducing leak potential, having a smaller size envelope than existing devices, and which does not require the customer to touch it. Furthermore, the device of the present invention does not need wrench clearance, is not orientation sensitive, does not require twisting or snapping to make a connection, and does allow multiple connections to be made at once. In a specific application, such as in continuous ink jet printheads, the built-in check valve can be used to keep residual ink from dripping.

In accordance with one aspect of the present invention, a fluid coupling is provided having improved mounting or locating capabilities, for in a mounting aperture. A substantially cylindrically symmetric exterior is capable of being inserted into the mounting aperture. Retaining capability is provided to engage symmetric retaining features and features of the mount, to prevent unwanted removal of the fitting from the mounting aperture.

The novel quick connect fitting construction of the present invention provides an improved means for mounting of a fitting. The improved mounting features simplify the installation of the fitting, simplify sealing at the mount, and provide more compliance for mating connections.

Other objects and advantages of the invention will be apparent from the following description and the appended claims.

### Brief Description of the Drawings

Fig. 1 illustrates the male and female portions of a multi-fitting coupling;
Fig. 2 illustrates female quick couplings being installed in a manifold application, being secured with a single retain ring;
Fig. 3 illustrates a cross section of quick coupling in "pocket" or manifold application with radial seal, and showing check valve features;
Fig. 4 illustrates close up view of a single coupling showing the retention features and the centering o-ring in a bulkhead, further showing barbed for connecting to fluid tubing;
Fig. 5 illustrates single coupling in bulkhead application ferrel type connection to fluid tubing;
Fig. 6 illustrates a coupling with an external removable barb connection;
Fig. 7 illustrates a coupling with radial seal in a "pocket" or manifold application with a pin used as a retaining device;
Fig. 8 illustrates a coupling with a flange as retaining feature and clasp and screw used as a retaining device;
Fig. 9 illustrates a non-mounted use of coupling with a u-clamp to secure male and female portions together; and
Fig. 10 illustrates a coupling in a sheet metal panel with grommet for compliant centering of coupling.

### Detailed Description of the Invention

The present invention proposes an improved construction for a quick connect fitting, utilizing a cylindrically symmetric exterior having one or more cylindrically symmetric features which can be engaged by retaining means for capturing the fitting in a mounting hole. Elastomeric means such as an o-ring serve to center the fitting in the mounting hole while providing sufficient compliance to facilitate the mating together of the fitting. The fitting construction provides sealing means which allow the fitting to be used for both direct connection to fluid tubing or to fluid manifolds.

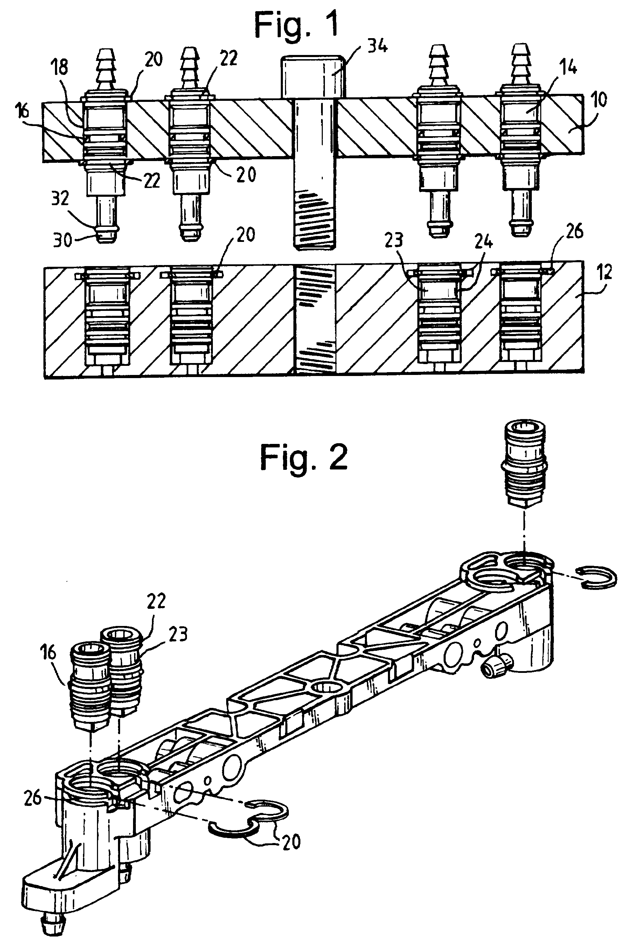

Referring now to Fig. 1, an upper half 10 and a lower half 12 of a multi-fitting coupling are to be connected. Fig. 1 shows the male half of four fittings 14, constructed in accordance with the present invention, located in holes through the upper half of the coupling 10. The fitting 14 has cylindrical symmetry. An o-ring 16 located by an o-ring groove in the fitting 14 provides a fluid seal between the fitting and the wall of the coupling. The o-ring 16 also serves to center the fitting in the hole or aperture 18 of the panel mount. Since the o-ring is typically an elastomeric material, and therefore compliant, it allows the axis of the fitting to shift and to tilt off the axis of the mounting hole, thereby allowing the two fitting halves in the upper and lower couplings 10 and 12 to mate. Snap rings 20 in retaining grooves 22 at the top and bottom of the fitting keep the fitting from being slid out of either the top or bottom of the mounting hole.

For applications where two retaining rings cannot realistically be used, a single retaining ring 20 can be used. Figs. 1 and 2 show multiple female fittings 23. Such an application might be appropriate for use with a manifold without internal access. It would also be appropriate where the retaining ring would encounter harsh or corrosive chemicals.

Continuing with Fig. 1, as shown, the female fitting 23 is inserted into a pocket or hole 24. A slot 26 in the housing 12 perpendicular to the axis of the fitting provides means to install and then constrain the retaining ring. In the prior art, pipe threaded quick connect fittings and manifolds would be required for such applications. The prior art then further requires Teflon tape or other sealing means to prevent leakage. The present invention both simplifies the installation process and produces a cleaner system, in that the construction is less likely to shed particles and debris. It should be noted that the mounting features, comprising the o-ring and the retaining grooves, are the same for both the male and the female portions of the fitting.

Fig. 1 shows the two halves of the fitting, male and female, located in separate panels or bulkheads as the halves are about to be mated. Tapered sections 30 at the entrance portion help to align the two halves as they are joined. An o-ring 32 on the male fitting prevents leakage at the male to female junction. Those skilled in the connector art will understand that standard design rules for o-rings are used to ensure proper compression of the o-rings for sealing at both the male-to-female fitting seal and the fitting-to-mounting hole seal.

A major advantage of these quick connect couplings over the prior art is their ability to still seal properly, even when misaligned. Prior art quick connect fittings, for use with 1/4 inch plastic tubing, have required alignment to within 8 mils to prevent leakage. The construction of the fittings of the present invention allows for up to 31 mils of misalignment without leakage. This allows two systems involving multiple fluid connections to mate, thereby making all fluid connections at one time. Fig. 1 illustrates such an example of a system with multiple fluid connections being made simultaneously. Since all the fluid connections can be made concurrently, the need to individually latch or secure each individual fluid connection can be eliminated. Only one latch or docking mechanism 34 is needed to secure the two systems together. By eliminating the need to individually make each connection, numerous customer related problems can be eliminated, including forgetting to make a connection, failure to completely secure or lock together the connector halves, and leakage of fluid on the customer while handling the connector.

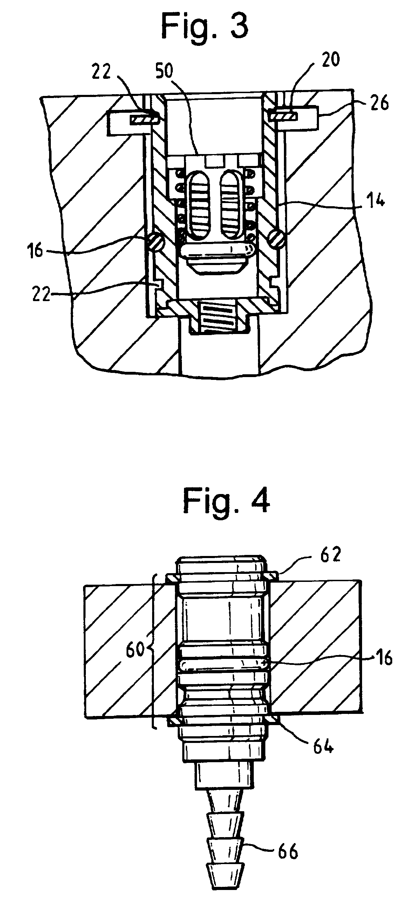

In one embodiment of the present invention, the male and female sections of the quick connect fitting can include check valves means. Fig. 3 shows such a check valve 50 in the female section of a fitting 14. The fitting is seated into a pocket, with the check valve present. The construction of the check valve means to prevent leakage from open fittings is well known by anyone skilled in the art.

In a further embodiment of the present invention, the quick connect fitting can also be made with a barb for coupling to a fluid tube, as illustrated in Fig. 4. A locating feature 60 comprises the portion between the retaining rings **62** and 64, including the grooves for the retaining rings and the o-ring 16. Additional embodiments and applications may include means for fluid tube couplings which seal and/or constrain the fluid tube from the exterior.

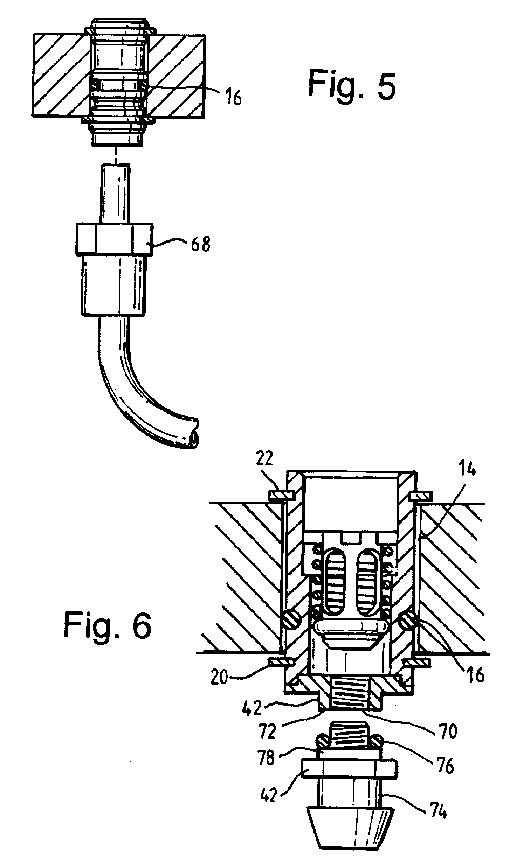

Fig. 5 illustrates an exemplary application, wherein the fitting of the present invention includes a ferrule type connection **68** to fluid tubes 70. O-ring 16 has two functions, including keeping the fluid from leaking between the coupling and the housing, and centering the fitting/coupling in the aperture. Even with shift or axis tilt, the fitting will still be properly aligned.

Alternatively, the end of the quick connect fitting can be equipped with a tapped hole 70 and a flat sealing surface 72, so that a variety of fluid tube couplings 74 may be screwed into place, as shown in Fig. 6. These couplings could include straight, right angle or even tee'd barb fittings. These couplings could also include a variety couplings which seal and/or constrain the fluid tube around the exterior of the tubing. An axial o-ring 76 between the flat sealing surfaces 72 of the quick connect fitting 14 and the flat sealing surface 78 of the fluid tube coupling prevents leakage. Wrench flats 42 can be provided around the perimeter of the flat sealing surface of the quick connect fitting to facilitate proper tightening of the fluid tube coupling to the quick connect fitting. An attractive feature of these quick connect fittings with the tapped hole and flat sealing surface is that these same fittings can be used both for connection to fluid tubing with screw-in couplings or for connection to a fluid manifold where o-ring 16 provides the sealing. This reduces the need for multiple fitting types.

The quick connect fitting of the present invention greatly simplifies assembly into a product. Prior art fittings generally required the use of a nut to secure the fitting in place. As such, these prior art fittings required the use of a wrench or other special tool to lock them in place. In the design of the present invention, the quick connect fitting is slid into the mounting hole and one or more retaining rings are installed. This reduces time for assembly as the installation of a retaining ring is much faster than the tightening of a nut. The installer no longer needs to make a judgment call about whether the nut has been tightened sufficiently - the retaining ring is either obviously in place or obviously not in place. The assembler also no longer needs to set the rotational orientation to ensure proper engagement or separation of the fitting, as the fitting has rotational symmetry. The present invention, by eliminating the need to wrench-secure the fitting, eliminates the clearance requirement for the wrench operation. This allows fittings to be more tightly packed.

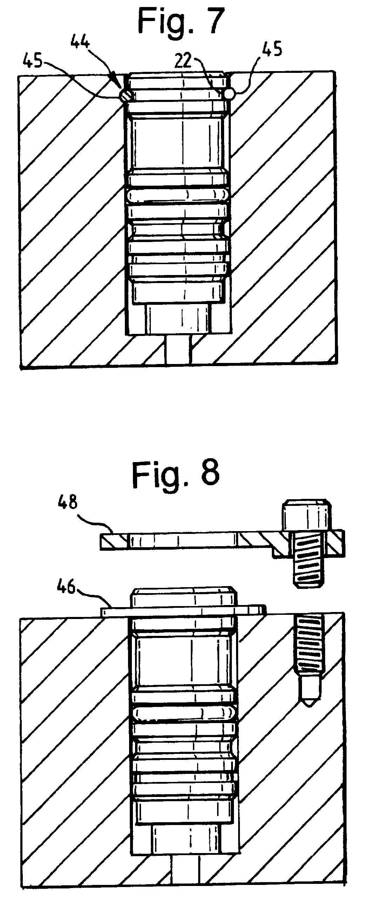

Although the quick connect fitting has heretofore been described as being held in place by retaining rings, it will be recognized that many other means could be employed to retain the fittings. For example, Fig. 7 shows how at least one dowel pin 44 can be used to engage a retaining groove 22 on the fitting and a corresponding feature, to hold the fitting captive while still allowing it to shift as needed to mate with a mating fitting. Rather than using a snap ring, the dowel 44 is pushed into the groove or hole 45 to engage the housing.

Another alternative is shown in Fig. 8. The fitting has a cylindrically symmetric flange 46 rather than a retaining ring groove. A clamp 48 or other suitable means may then be used to hold the flange 46 captive. Hence, a different fitting can be molded with the flange, that extends outward and this can be clamped.

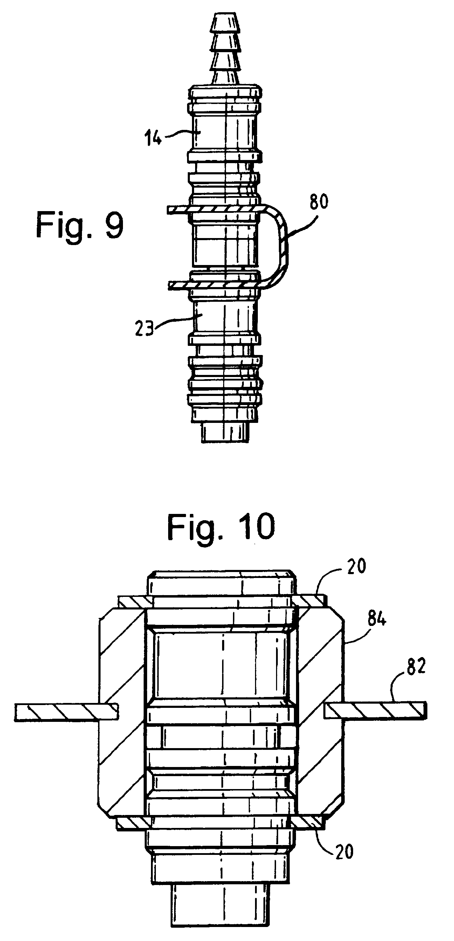

While this invented fitting is of particular value when the mating halves of the fitting are held together by means of the structures into which they are mounted, in keeping with the spirit of the invention, a clasp may be used which engages the retaining grooves or flanges of both the male and female halves of the fitting could be used to latch the halves together. One embodiment of this is shown in Fig. 9, which discloses a U-clamp 80, fitted to engage the retaining grooves of both the male 14 and female 23 halves of the fitting. Hence, the fitting can be used without attaching it to a housing, but the U-clamp 80 prevents the fitting from pulling apart.

In applications described and illustrated thus far, the fitting was seated in a hole through a fairly thick walled manifold or bulkhead. In such applications there is sufficient wall thickness to ensure the o-ring gets properly engaged. In applications where the fitting is mount in a sheet metal wall 82 as shown in Fig. 10, there is insufficient wall thickness for proper engagement of the o-ring. The use of a compliant means 84 allows this invented fitting to be used for these applications as well. The compliant means could be any suitable means, such as, for example, an elastomeric grommet, a plastic element, or metal springs. The compliant means 84 functions like the o-ring in alternative embodiments herein, serving to center the fitting in the mounting hole while still allowing the axis of the fitting to shift and to tilt off the axis of the mounting hole to allow the two fitting halves to mate.

### Industrial Applicability and Advantages

The novel quick connect fitting construction of the present invention provides an improved means for mounting of a fitting. The improved mounting features simplify the installation of the fitting, simplify sealing at the mount, and provide more compliance for mating connections. While this quick connect fitting is of value for a wide variety of applications it is of particular value for fluid connection in the printing industry and most particularly for use in ink jet printers.

The invention has been described in detail with particular reference to certain preferred embodiments thereof, but it will be understood that modifications and variations can be effected within the spirit and scope of the invention.

## Claims

1. A fluid coupling having improved means for mounting or locating in a mounting aperture, the improvement comprising:
a substantially cylindrically symmetric exterior which can be inserted into a mounting aperture;
at least one substantially cylindrically symmetric retaining feature;
retaining means for engaging the symmetric retaining features and features of the mount which prevent unwanted removal of the fitting from the mounting aperture.

2. A fluid coupling as claimed in claim 1 further comprising compliant means for centering the fitting in the mounting aperture.

3. A fluid coupling as claimed in claim 1 further comprising a check valve integral with the fluid coupling.

4. A fluid coupling as claimed in claim 1 further comprising sealing means for allowing the fitting to be used for direct connection to fluid tubing and to fluid manifolds.

5. A fluid coupling as claimed in claim 1 further comprising floating means to allow for multiple and concurrent connections.

6. A fitting having an improved locking mechanism for locking male and female portions together, the improvement comprising:
cylindrically symmetric retaining features in each portion; and
retaining means which engage the cylindrically symmetric retaining features of each portion to prevent disengagement of the male and female portions.

7. A fitting as claimed in claim 6 wherein the cylindrically symmetric retaining features of at least one of said portions comprise at least one groove.

8. A fitting as claimed in claim 6 wherein the cylindrically symmetric retaining features of at least one of said portions comprises at least one flange.

9. A fitting as claimed in claim 6 wherein the retaining means comprise a housing for receiving the fitting.

10. A fitting as claimed in claim 6 wherein the retaining means comprise a manifold without internal access for receiving the fitting.
